(19) Europäisches Patentamt
European Patent Office
Office européen des brevets

(11) **EP 3 172 106 B1**

(12) **EUROPEAN PATENT SPECIFICATION**

(45) Date of publication and mention
of the grant of the patent:
**19.02.2020 Bulletin 2020/08**

(21) Application number: **15762733.2**

(22) Date of filing: **24.07.2015**

(51) Int Cl.:
**B61L 23/04** $^{(2006.01)}$

(86) International application number:
**PCT/IB2015/055630**

(87) International publication number:
**WO 2016/012988 (28.01.2016 Gazette 2016/04)**

(54) **METHOD TO OBTAIN DATA CONCERNING THE UPPER PROFILE OF AN ELEMENT OF A RAILWAY TRACK OR SWITCH**

VERFAHREN ZUR GEWINNUNG VON DATEN BEZÜGLICH DES OBEREN PROFIL EINES ELEMENTS EINER BAHNGLEISE ODER -WEICHE

PROCÉDÉ D'OBTENTION DE DONNÉES CONCERNANT LE PROFIL SUPÉRIEUR D'UN ÉLÉMENT D'UNE LIGNE DE CHEMIN DE FER OU D'UN DISPOSITIF D'AIGUILLAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.07.2014 IT BO20140424**

(43) Date of publication of application:
**31.05.2017 Bulletin 2017/22**

(73) Proprietor: **General Impianti S.r.l.**
**60030 Maiolati Spontini (IT)**

(72) Inventor: **MATTIOLI, Graziano**
**60019 Senigallia (IT)**

(74) Representative: **Manconi, Stefano et al**
**Studio Torta S.p.A.**
**Via Viotti, 9**
**10121 Torino (IT)**

(56) References cited:
**DE-C1- 19 721 915**

• **Nicusor Baroiu ET AL: "THE RECONSTRUCTION OF A 3D COMPONENT THROUGH REVERSE ENGINEERING", CONSTRUCTII DE MASINI, 2011, pages 1-8, XP055176968, Iasi Retrieved from the Internet: URL:http://www.researchgate.net/profile/Ni cusor_Baroiu/publication/237076192_The_Rec onstruction_of_a_3D_Component_Through_Re ve rse_Engineering/links/0c9605252eb7b6a3b300 0000.pdf [retrieved on 2015-03-16]**

**Description**

TECHNICAL FIELD

The present invention relates to a method to obtain data concerning the upper profile of an element of a railway track or switch.

In particular, the present invention is advantageously intended for use on a self-propelled apparatus for measuring geometric and/or structural parameters of a railway track or switch.

BACKGROUND ART

Known kinds of the aforesaid apparatus comprise a motor-powered cart, on which an electronic measuring module is mounted, said module being provided with at least one laser profilometer device for acquiring digital images of the upper part of at least one rail of a railway track, while the cart moves forward along the track, and with a memory to store all the images acquired. The images that are acquired are then sent to an external server to be processed in order to precisely measure geometric and structural parameters of the track or any switches along said track, for example the shape of the upper profile of the track.

To obtain measurements with a high level of accuracy, it is necessary to acquire a large amount of data in the form of digital images. Each image acquired by the laser profilometer comprises a cloud or a series of points that require a relatively large amount of memory space and their processing uses a large amount of hardware resources.

Owing to the relatively limited storage capacity of the measuring module, data are downloaded frequently to the external server. For convenience, the server is in a remote position and the data are downloaded via a radiofrequency interface which is normally that of a mobile telephone network and the speed of data transmission is thus relatively slow. In other words, to obtain measurements with a high level of precision, the cart has to be stopped frequently and for a long time to download the data from the measuring module.

Moreover, the point clouds often present disturbance, due to the influence of environmental factors and/or imperfect functioning of the laser profilometers that generated them, and data gaps, that is to say, low point densities in certain areas. Data gaps tend to conceal the real trends of the elements to be measured and make it difficult to process the images due to the lack of data in certain important parts of the image. Disturbance tends to highlight trends that do not actually exist or are not significant.

German Patent DE 19721915 C1 discloses a system for measuring unevenness formed by grooves and/or long waves in a surface of a rail by using a measuring platform. The measuring platform moves along the rail and projects a light streak that extends in a direction of the movement onto the surface at a fixed projection angle that is tilted relative to a surface normal of the surface. The light streak is reproduced on a planar, position-sensitive photo receiver with a plurality of successive instantaneous exposures. The photo receiver is fixedly arranged on the measuring platform with a recording angle that is tilted relative to the fixed projection angle. The system records the surface along the direction of the movement with a plurality of continuous light-streak images and determines a surface profile of the surface along the direction of the movement from deformations in the plurality of the light-streak images.

A paper titled "The reconstruction of a 3D component through reverse engineering", by Nicusor Baroiu et al., and published in 2011, discloses a method for modelling a 3D component. The method comprises the steps of scanning the shape of the component in order to provide a point cloud and processing the point cloud in order to obtain a model of a new component similar to the original one.

DISCLOSURE OF INVENTION

The purpose of the present invention is to provide a method to obtain data concerning the upper profile of a railway track or switch, which overcomes the drawbacks described above and is, at the same time, simple and inexpensive to implement.

According to the present invention there is provided a method to obtain data concerning the upper profile of an element of a railway track or switch by means of an electronic measuring module mounted on a cart provided with at least one profilometer device, and a self-propelled apparatus for measuring geometric and/or structural parameters of an element of a railway track or switch, as claimed in the appended claims.

BRIEF DESCRIPTION OF THE DRAWINGS

The present invention will now be described with reference to the accompanying drawings, illustrating a nonlimiting embodiment thereof, in which:

- figure 1 shows a self-propelled apparatus comprising a motor-powered cart provided with an electronic measuring module wherein the method according to the present invention is implemented;
- figure 2 shows an example of an image of the upper profile of a railway track acquired using the apparatus shown in figure 1;
- figure 3 shows an example of intermediate processing of the image of figure 2 performed following the method according to the present invention; and
- figure 4 shows an example of processing of the image of figure 3 performed following the method according to the present invention.

## BEST MODE FOR CARRYING OUT THE INVENTION

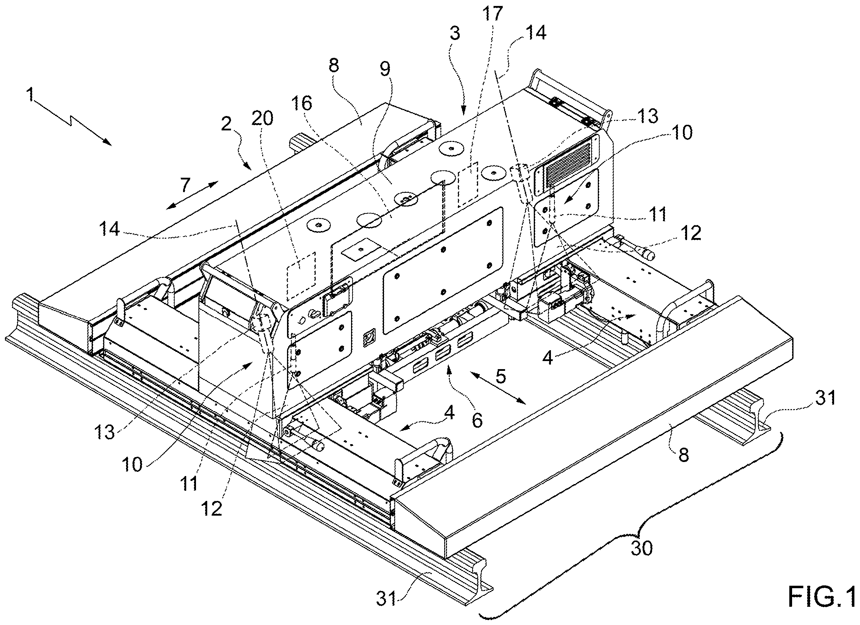

In figure 1, reference numeral 1 globally denotes a self-propelled apparatus for measuring geometric and/or structural parameters of a railway track and/or switch, denoted by numeral 30 and, for the sake of simplicity, referred to in the following description as a track.

The apparatus 1 comprises a cart 2, which is preferably, but not necessarily, motor-powered, suitable to be coupled, in use, to the track 30, and a measuring module 3 mounted on the cart 2 to measure at least one geometric and/or structural parameter of the track 30, while, in use, the cart 2 moves along the track 30.

The cart 2 is H-shaped, and comprises two wheel sets 4 parallel to one another, which are elongated in shape, extend in a direction 5 that is substantially horizontal, and are suitable to each be coupled to a respective rail 31 of the track 30. The two wheel sets 4 are connected to one another by a supporting frame 6, which has an elongated shape, and extends in a direction 7 that is substantially horizontal and transverse to the direction 5. The wheel sets 4 are suitable to couple with the rails 31 in the direction 7 transverse, and in particular perpendicular, to the rails 31.

The cart 2 has two protective cushions 8 parallel to one another, each of which extends in the direction 7, and is coupled to the free ends of the two wheel sets 4 to guarantee the safety of operators.

The measuring module 3 comprises an outer shell 9, which is substantially parallelepiped-shaped and is mounted on the frame 6, and two laser profilometers 10, one for each wheel set 4, arranged inside the shell 9 and suitable to acquire digital images of the upper part of a respective rail 31.

Each laser profilometer 10 comprises a laser source 11, which is suitable to project, through a respective opening (not illustrated) in the bottom of the shell 9, a laser curtain 12 transverse to the direction 5 in order to be directed, in use, onto the respective rail 31, and an image acquisition device 13, which consists for example of a video camera and is oriented so as to frame said opening in the bottom of the shell 9 with its optical axis 14 slanting with respect to the plane on which the laser curtain lies 12 to acquire images of the luminous contour generated by the laser curtain 12 on the upper surface of the respective rail 31. In the example of figure 1, the laser curtain 12 is perpendicular to the direction 5.

According to an alternative embodiment of the apparatus 1 that is not illustrated, it is the optical axis 14 that is perpendicular to the direction 5, not the laser curtain 12.

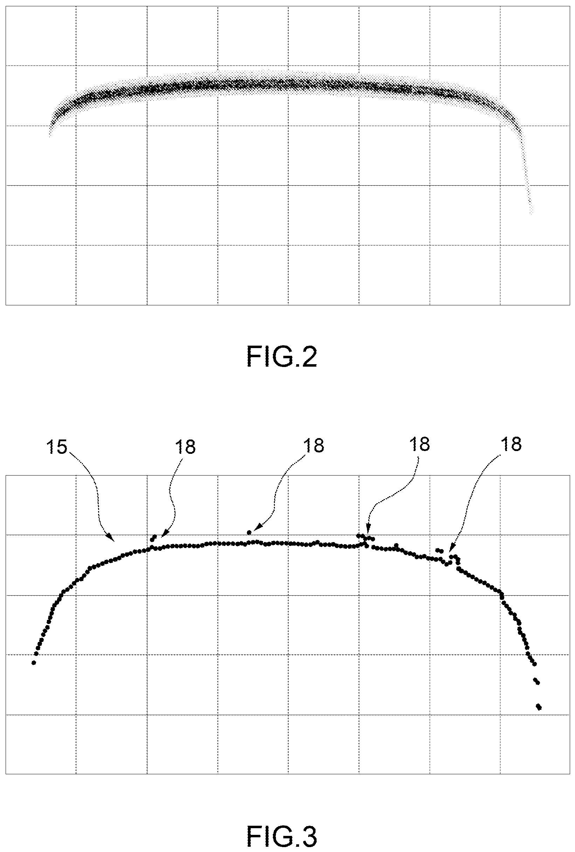

Figure 2 shows an example of a digital image (positive) acquired by one of the laser profilometers 10. This image records the luminous contour acquired as a plurality of points distributed on a plane and consisting of respective pixels of the area of the image characterized by different luminance values, meaning different values of tones of grey.

Figure 3 shows an example of processing a digital image the same as that of figure 2, performed using a profile reconstruction algorithm of a known type which transforms the pixels of the digital image into a corresponding cloud of points distributed on a plane and characterized simply by pairs of values of Cartesian coordinates on that plane. The point cloud, denoted by numeral 15 in figure 3, represents the luminous contour acquired. Such point cloud is indicative of the upper profile of the rail 31 in correspondence with a respective plane that is transverse to the direction 5, which coincides with the forward moving direction of the cart 2.

Again with reference to figure 1, the two laser profilometers 10 are fixed with respect to the shell 9, and thus with respect to the supporting frame 6, with the optical axes 14 parallel to a plane that is transverse to the direction 7 and parallel to the direction 5.

The measuring module 3 further comprises a processing and control unit 16, implemented in the form of one or more electronic boards, which is also arranged inside the shell 9 and is capable of processing the images acquired by the two laser profilometers 10 in order to measure certain geometric parameters of the track 30.

In order to permit subsequent post-processing of the images that cannot be processed onboard the measuring module 3 for several reasons, for example the relatively limited calculating capacity of the processing and control unit 16, the original data consisting of the point clouds (digital images) are compressed and then stored in a memory 17 of the measuring module 3. Thus, the processing and control unit 16 is configured to transform original data into compressed data, according to the following procedure. In particular, a software is installed in the processing and control unit 16, said software being designed so that, when loaded to the processor of the processing and control unit 16, it implements the following data compression procedure.

Each point cloud is filtered to eliminate disturbance and anomalous peaks, for example those indicated by numeral 18 in figure 3. Data filtering is, however, an optional step, which may be avoided if the laser profilometers 10 deliver high quality images.

For each point cloud, a piecewise polynomial function consisting of a spline function is generated. The piecewise polynomial function approximates the point cloud so as to transform original data into compressed data, which consist of parameters of the piecewise polynomial function. Each point cloud is two-dimensional, that is to say it is represented on a plane, so that the corresponding piecewise polynomial function is two-dimensional.

According to the conventional theory of piecewise polynomial functions, a spline is defined as a linear combination of a number N of B-spline polynomial functions or bases, having a maximum degree D and parameterized by a number K, equal to N+D+1, of so-called knot parameters. In other words, the parameters of the spline which constitute said compressed data comprise a number K of nodal points, also known as "knots", a maximum degree D of the polynomial bases and a number N of control points, the latter being determinable in a conventional manner as a function of the nodal points and coefficients of the linear combination defining the spline.

The maximum degree D is predetermined and selected in a group comprising values 2 and 3. With a maximum degree D of more than 3 determining the spline requires very long processing times. With a maximum degree D of less than 2 (the spline would simply be a broken line) the resulting spline (simply a broken line) would not be very adaptable to the original data. Thus the maximum degree D is already stored in the memory 17 before data acquisition begins.

Given a certain maximum degree D, the number N is determined as a function of a desired degree of compression for the compressed data and of the number of points of the point cloud. In fact, if P is the number of points of the point cloud on the plane of the image, the degree of compression is given by the ratio:

$$2 \cdot P \ / \ (3 \cdot N + D + 1).$$

If for the number P we consider an average number of points per image, then the number N is actually predetermined as a function of the degree of compression. In this case, the number N is already stored in the memory 17 before data acquisition begins.

The step of generating the spline comprises, first of all, the generation of the nodal points, which are generated so as to have a value of between a minimum and a maximum, for example between 0 and 1, and to be uniformly spaced apart from one another.

According to an alternative embodiment of the present invention, the nodal points are generated so as to be non-uniformly spaced apart, and in particular in proportion to the distances between the points of the point cloud. This type of non-uniform spacing between the nodal points is obtained by using the so-called chord length method applied to the point cloud.

Once the nodal points have been found, the control points which complete the characterization of the spline that approximates the point cloud are determined using the so-called ordinary least squares (OLS) method. In particular, the spline that approximates the point cloud is that which minimizes the sum of the squares of the distances between each point of the point cloud and the curve representing the actual function.

More in detail, generating the control points consists of generating the polynomial bases based on the nodal points, determining, for each of the two coordinates of the plane of the point cloud (plane of the image containing the point cloud), a respective series of coefficients of the linear combination that defines the spline by applying the ordinary least squares method to said point cloud, and lastly generating the control points using the two series of coefficients based on the conventional mathematical relations.

Note that the procedure for generating the nodal points and control points described above in order to obtain the compressed data is normally performed as a post-processing procedure, that is to say after acquiring the desired series of images. Nonetheless, methods are known which permit the aforesaid compression procedure to be performed substantially in real time, that is on small sets (packets) of consecutive images as these are acquired.

According to an alternative embodiment of the present invention, the control points are determined directly from the nodal points and the point cloud, that is, without generating the polynomial bases, using the so-called variation diminishing approximation (VDA) method. With this alternative compression procedure the quality of transformation is not as good as with the procedure using the ordinary least squares method, that is the curve representing the spline follows the point cloud less closely, but it guarantees a speed of execution that is two or three times faster.

The compression procedure using the VDA method may also be performed as a post-processing procedure or in real time.

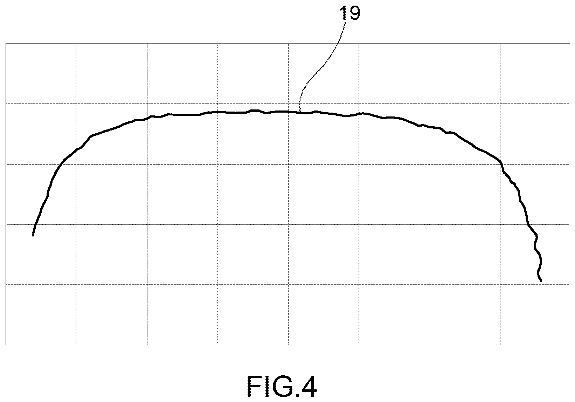

Figure 4 shows, purely by way of example, a curve 19 representing a spline which approximates the point cloud 15 of figure 3.

The maximum degree D, the nodal points and the control points of each spline constitute together the compressed data obtained from the compression of the original data related to a respective point cloud. The compressed data of all the acquired images are stored in the memory 17, taking up considerably less memory space than the respective original data would.

Because the compressed data use less memory space, they can be transferred more quickly to a remote server via a radiofrequency interface. For that purpose, the measuring module 3 comprises a radio transceiver 20

Although the invention described above refers in particular to a specific embodiment, it should not be considered as limited to this example of embodiment, and the scope of the invention as claimed includes all variants, modifications or simplifications that are obvious to a person skilled in the art, such as the use of one or two mechanical profilometers, of the type provided with respective rows of feeler pins.

**Claims**

1. A method to obtain data concerning the upper profile of an element (31) of a railway track or switch (30) by means of an electronic measuring module (3) mounted on a cart (2) and provided with at least one profilometer device (10); the method being **characterized in that** it comprises:

- acquiring, by means of said profilometer device (10) and while the cart (2) moves forward along the railway track or switch (30), a sequence of point clouds (15), each point cloud (15) being indicative of said upper profile in correspondence with a respective plane that is transverse to the forward moving direction (5) of the cart (2);
- for each point cloud (15), generating a respective piecewise polynomial function consisting of a spline function, which approximates said point cloud (15) so as to transform original data consisting of said point cloud (15) into compressed data consisting of parameters of said piecewise polynomial function.

2. A method according to claim 1, wherein said piecewise polynomial function is generated using the ordinary least squares method.

3. A method according to claim 1, wherein said piecewise polynomial function is generated using the VDA method.

4. A method according to any of the previous claims, wherein said parameters comprise a maximum degree (D) of the polynomial bases of said piecewise polynomial function; said maximum degree (D) being predetermined and selected in a group comprising values 2 and 3.

5. A method according to any of the previous claims, wherein said parameters comprise control points of said piecewise polynomial function; the number (N) of said control points being predetermined as a function of a degree of compression desired for said compressed data.

6. A method according to any of the previous claims, wherein said parameters comprise nodal points and control points of said piecewise polynomial function; the step of generating the piecewise polynomial function comprising:

   - generating said nodal points; and
   - generating said control points based on the nodal points and on said point cloud (15).

7. A method according to claim 6, wherein said nodal points are generated so as to be uniformly spaced apart from one another.

8. A method according to claim 6, wherein said nodal points are generated so as to be spaced apart from one another in proportion to the distances between the points of the point cloud (15).

9. A method according to any of the claims from 6 to 8, wherein said control points are generated using the ordinary least squares method applied to said point cloud (15).

10. A method according to any of the claims from 6 to 8, wherein said piecewise polynomial function is a linear combination of polynomial bases; generating said control points based on the nodal points comprises:

    - generating the polynomial bases based on the nodal points;
    - determining, for each coordinate of the plane of the point cloud (15), a respective series of coefficients of said linear combination by applying the ordinary least squares method to the point cloud (15); and
    - generating said control points based on said series of coefficients.

11. A method according to any of the claims from 6 to 8, wherein said control points are directly generated using the VDA method.

12. A method according to any of the claims from 1 to 11, wherein said profilometer device is a laser profilometer (10), which is suited to capture a sequence of digital images of the upper part of said element (31), so that each image comprises a respective one of said point clouds (15).

13. A method according to any of the claims from 1 to 12, wherein said element consists of a rail (31) of said railway track or switch (30).

14. A self-propelled apparatus for measuring geometric and/or structural parameters of an element (31) of a railway track or switch (30), the apparatus (1) comprising a cart (2) and an electronic measuring module (3), which is mounted on the cart (2) and comprises at least a profilometer device (10) and control and processing means (16) configured to implement the method according to one of the claims from 1 to 13.

**Patentansprüche**

1. Verfahren, um Daten, die das obere Profil eines Elements (31) eines Eisenbahngleises oder einer Eisenbahnweiche (30) betreffen, mittels eines elektronischen Messmoduls (3) zu erhalten, das auf einen Laufwagen (2) montiert und mit zumindest einer Profilometer-Vorrichtung (10) versehen ist; wobei das Verfahren **dadurch gekennzeichnet ist, dass** es aufweist:

   Erfassen, mittels der Profilometer-Vorrichtung (10) und während sich der Laufwagen (2) entlang dem Eisenbahngleis oder der Eisenbahnweiche (30) vorwärts bewegt, einer Sequenz von Punktwolken (15), wobei jede Punktwolke (15) das obere Profil entsprechend einer jeweiligen Ebene angibt, die zur Vorwärtsbewegungsrichtung (5) des Laufwagens (2) transversal ist;

für jede Punktwolke (15), Erzeugen einer jeweiligen stückweise polynominalen Funktion, die aus einer Spline-Funktion besteht, welche die Punktwolke (15) approximiert, um aus der Punktwolke (15) bestehende ursprüngliche Daten in komprimierte Daten zu transformieren, die aus Parametern der stückweise polynominalen Funktion bestehen.

2. Verfahren nach Anspruch 1, wobei die stückweise polynominale Funktion unter Verwendung der gewöhnlichen Methode der kleinsten Quadrate erzeugt wird.

3. Verfahren nach Anspruch 1, wobei die stückweise polynominale Funktion unter Verwendung des VDA-Verfahrens erzeugt wird.

4. Verfahren nach einem der vorhergehenden Ansprüche, wobei die Parameter einen maximalen Grad (D) der Polynombasen der stückweise polynominalen Funktion aufweisen; wobei der maximale Grad (D) vorbestimmt und in einer Werte 2 und 3 aufweisenden Gruppe ausgewählt wird.

5. Verfahren nach einem der vorhergehenden Ansprüche, wobei die Parameter Kontrollpunkte der stückweise polynominalen Funktion aufweisen; wobei die Anzahl (N) der Kontrollpunkte als eine Funktion eines für die komprimierten Daten gewünschten Kompressionsgrads vorbestimmt wird.

6. Verfahren nach einem der vorhergehenden Ansprüche, wobei die Parameter Knotenpunkte und Kontrollpunkte der stückweise polynominalen Funktion aufweisen; wobei der Schritt zum Erzeugen der stückweise polynominalen Funktion aufweist:

   Erzeugen der Knotenpunkte; und
   Erzeugen der Kontrollpunkte, basierend auf den Knotenpunkten und auf der Punktwolke (15).

7. Verfahren nach Anspruch 6, wobei die Knotenpunkte so erzeugt werden, dass sie voneinander gleichmäßig beabstandet sind.

8. Verfahren nach Anspruch 6, wobei die Knotenpunkte so erzeugt werden, dass sie im Verhältnis der Abstände zwischen den Punkten der Punktwolke (15) voneinander beabstandet sind.

9. Verfahren nach einem der Ansprüche 6 bis 8, wobei die Kontrollpunkte unter Verwendung der auf die Punktwolke (15) angewandten Methode der kleinsten Quadrate erzeugt werden.

10. Verfahren nach einem der Ansprüche 6 bis 8, wobei die stückweise polynominale Funktion eine lineare Kombination von Polynombasen ist; wobei ein Erzeugen der Kontrollpunkte basierend auf den Knotenpunkten aufweist:

   Erzeugen der Polynombasen, basierend auf den Knotenpunkten;
   Bestimmen, für jede Koordinate der Ebene der Punktwolke (15), einer jeweiligen Folge von Koeffizienten der linearen Kombination, indem die gewöhnliche Methode der kleinsten Quadrate auf die Punktwolke (15) angewendet wird; und
   Erzeugen der Kontrollpunkte, basierend auf der Folge von Koeffizienten.

11. Verfahren nach einem der Ansprüche 6 bis 8, wobei die Kontrollpunkte unter Verwendung des VDA-Verfahrens direkt erzeugt werden.

12. Verfahren nach einem der Ansprüche 1 bis 11, wobei die Profilometer-Vorrichtung ein Laser-Profilometer (10) ist, das dafür geeignet ist, eine Sequenz digitaler Bilder des oberen Teils des Elements (31) aufzunehmen, so dass jedes Bild eine jeweilige der Punktwolken (15) aufweist.

13. Verfahren nach einem der Ansprüche 1 bis 12, wobei das Element aus einer Schiene (31) des Eisenbahngleises oder der Eisenbahnweiche (30) besteht.

14. Selbstfahrende Einrichtung zum Messen geometrischer und/oder struktureller Parameter eines Elements (31) eines Eisenbahngleises oder einer Eisenbahnweiche (30), wobei die Einrichtung (1) einen Laufwagen (2) und ein elektronisches Messmodul (3) aufweist, welches auf dem Laufwagen (2) montiert ist und zumindest eine Profilometer-Vorrichtung (10) und Steuerungs- und Verarbeitungsmittel (16) aufweist, die dafür konfiguriert sind, das Verfahren nach einem der Ansprüche 1 bis 13 auszuführen.

**Revendications**

1. Procédé d'obtention de données concernant le profil supérieur d'un élément (31) d'une voie de chemin de fer ou d'un aiguillage (30) au moyen d'un module de mesure électronique (3) monté sur un chariot (2) et muni d'au moins un dispositif profilomètre (10); le procédé étant **caractérisé en ce qu'**il comporte les étapes consistant à:

   - acquérir, au moyen dudit dispositif de profilomètre (10) et pendant que le chariot (2) avance vers l'avant le long de la voie de chemin de fer ou de l'aiguillage (30), une séquence de nuages de points (15), chaque nuage de points (15) étant indicatif dudit profil supérieur en correspondance avec un plan respectif qui est transversal à la direction de déplacement avant (5) du chariot (2);

- pour chaque nuage de points (15), générer une fonction polynomiale respective par morceaux, consistant en une fonction spline, qui se rapproche dudit nuage de points (15) afin de transformer des données originales constituées dudit nuage de points (15) en données comprimées consistant en paramètres de ladite fonction polynomiale par morceaux.

**2.** Procédé selon la revendication 1, dans lequel ladite fonction polynomiale par morceaux est générée en utilisant la méthode des moindres carrés ordinaires.

**3.** Procédé selon la revendication 1, dans lequel ladite fonction polynomiale par morceaux est générée en utilisant la méthode VDA.

**4.** Procédé selon l'une quelconque des revendications précédentes, dans lequel lesdits paramètres comprennent un degré maximal (D) des bases polynomiales de ladite fonction polynomiale par morceaux; ledit degré maximal (D) étant prédéterminé et sélectionné dans un groupe comprenant les valeurs 2 et 3.

**5.** Procédé selon l'une quelconque des revendications précédentes, dans lequel lesdits paramètres comprennent des points de contrôle de ladite fonction polynomiale par morceaux; le nombre (N) desdits points de contrôle étant prédéterminé en fonction du degré de compression souhaité pour lesdites données comprimées.

**6.** Procédé selon l'une quelconque des revendications précédentes, dans lequel lesdits paramètres comprennent des points nodaux et des points de contrôle de ladite fonction polynomiale par morceaux; l'étape de génération de la fonction polynomiale par morceaux comprenant:

- la génération desdits points nodaux; et
- la génération desdits points de contrôle sur la base des points nodaux et sur ledit nuage de points (15).

**7.** Procédé selon la revendication 6, dans lequel lesdits points nodaux sont générés de manière à être uniformément espacés les uns des autres.

**8.** Procédé selon la revendication 6, dans lequel lesdits points nodaux sont générés de manière à être espacés les uns des autres proportionnellement aux distances entre les points du nuage de points (15).

**9.** Procédé selon l'une quelconque des revendications 6 à 8, dans lequel lesdits points de contrôle sont générés en utilisant la méthode des moindres carrés ordinaires appliquée audit nuage de points (15).

**10.** Procédé selon l'une quelconque des revendications 6 à 8, dans lequel ladite fonction polynomiale par morceaux est une combinaison linéaire de bases polynomiales; la génération desdits points de contrôle sur la base des points nodaux comprenant:

- la génération des bases polynomiales sur la base des points nodaux
- la détermination, pour chaque coordonnée du plan du nuage de points (15), une série respective de coefficients de ladite combinaison linéaire en appliquant la méthode des moindres carrés ordinaires au nuage de points (15); et
- la génération lesdits points de contrôle sur la base de ladite série de coefficients.

**11.** Procédé selon l'une quelconque des revendications 6 à 8, dans lequel lesdits points de contrôle sont directement générés en utilisant la méthode VDA.

**12.** Procédé selon l'une quelconque des revendications 1 à 11, dans lequel ledit dispositif de profilomètre est un profilomètre laser (10), qui est adapté pour capturer une séquence d'images numériques de la partie supérieure dudit élément (31), de sorte que chaque image comprend un nuage de points respectif desdits nuages de points (15).

**13.** Procédé selon l'une quelconque des revendications 1 à 12, dans lequel ledit élément est constitué d'un rail (31) de ladite voie de chemin de fer ou de l'aiguillage (30).

**14.** Appareil automoteur pour mesurer des paramètres géométriques et / ou structurels d'un élément (31) d'une voie de chemin de fer ou d'un aiguillage (30), l'appareil (1) comprenant un chariot (2) et un module de mesure électronique (3), qui est monté sur le chariot (2) et comprend au moins un dispositif profilomètre (10) et des moyens de contrôle et de traitement (16) configurés pour mettre en œuvre le procédé selon l'une des revendications là 13.

FIG.1

EP 3 172 106 B1

FIG.2

FIG.3

19

FIG.4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 19721915 C1

**Non-patent literature cited in the description**

- **NICUSOR BAROIU et al.** *The reconstruction of a 3D component through reverse engineering,* 2011